Europäisches Patentamt

**European Patent Office**

Office européen des brevets

(19)

(11) Publication number: **0 155 303**
**B1**

(12) **EUROPEAN PATENT SPECIFICATION**

(45) Date of publication of patent specification: **28.09.88**

(51) Int. Cl.⁴: **H 05 B 41/29, H 02 M 7/537**

(21) Application number: **84903442.6**

(22) Date of filing: **05.09.84**

(86) International application number:
**PCT/FI84/00061**

(87) International publication number:
**WO 85/01180 14.03.85 Gazette 85/07**

(54) **INVERTER CIRCUIT WITH A CONTROL CIRCUIT FOR LEADING TRANSISTORS MORE EFFECTIVELY INTO A TURNED-OFF STATE.**

(30) Priority: **06.09.83 FI 833186**

(43) Date of publication of application:
**25.09.85 Bulletin 85/39**

(45) Publication of the grant of the patent:
**28.09.88 Bulletin 88/39**

(84) Designated Contracting States:
**DE FR GB NL SE**

(56) References cited:
**EP-A-0 075 176**
**US-A-4 045 711**

(73) Proprietor: **Oy Helvar**
**Purotie 1-3**
**SF-00380 Helsinki 38 (FI)**

(72) Inventor: **VIRTA, Matti**
**Porintie 3 E 48**
**SF-00350 Helsinki 35 (FI)**

(74) Representative: **Patentanwälte Schulze Horn und Hoffmeister**
**Goldstrasse 36**
**D-4400 Münster (DE)**

Courier Press, Leamington Spa, England.

## Description

The present invention relates to an inverter circuit comprising:

- two transistors connected in series across the terminals of a direct-current power supply, a control transformer for the transistors, each of two secondary windings of said transformer being connected to a respective base control circuit of said transistors

- a load circuit including a series connection of an inductive winding and a capacitor and being connected across a point between the transistors and the direct current power supply,

- and a base current control circuit, including a secondary winding for said inductive winding and a winding for the base control transformer, said latter winding being connected to said secondary winding.

An inverter circuit of this type is shown in US-A 4 045 711. With the known inverter circuit the base current of the transistors is controlled primarily by means of the secondary winding of a resonance circuit inductive winding. A base current phase is shifted forward relative to the collector current of a transistor, bringing the transistors into a conductive state, but delayed, so that the current of one transistor has time to cut off despite its storage time. Thereby the simultaneous conducting of transistors and power losses are eliminated.

In practice, however, the following factors occur, which are not compensated by said prior art circuit:

1. The frequency and/or amplitude of a resonance circuit current may fluctuate considerably with varying load. As the frequency and/or amplitude increases, the chance of simultaneous conducting states of transistors increases. In order to prevent this, transients of a transistor into a turned-off or non-conductive state should be made more effective or quicker, but this cannot be achieved by the prior art circuit switching.

2. The individual properties of transistors vary considerably. For example, the voltage drops occurring across different transistors with the same base current are different. When the voltage drop is low, a transistor is highly saturated and can only slowly be switched into a non-conductive state. In other words, the "storage time" of a transistor will be long. The prior art circuit switching does not at all observe this individual variation of the properties of transistors, which demands that transistors must be selected carefully if simultaneous conductivity states of transistors are to be avoided.

An object of the invention is to provide an inverter circuit which includes a base current control circuit for observing both the load and the state of a transistor.

This object is achieved according to the invention by means of an inverter circuit with the characteristic features as defined in claim 1. Useful modifications are disclosed in dependent claims 2 and 3.

According to the invention an automatic control which observes the variations appearing in the state of a load or individual characteristics of transistors is performed by a simple circuit. No additional circuits are required for observing the state of load. Transistors to be chosen can be cheaper, because no selected transistors are necessary.

One preferred embodiment of the invention will now be described in detail with reference made to the accompanying drawings. Aside from the present base control circuit, a corresponding inverter circuit and its operation has been disclosed in the Applicants' FI Patent specification 63147.

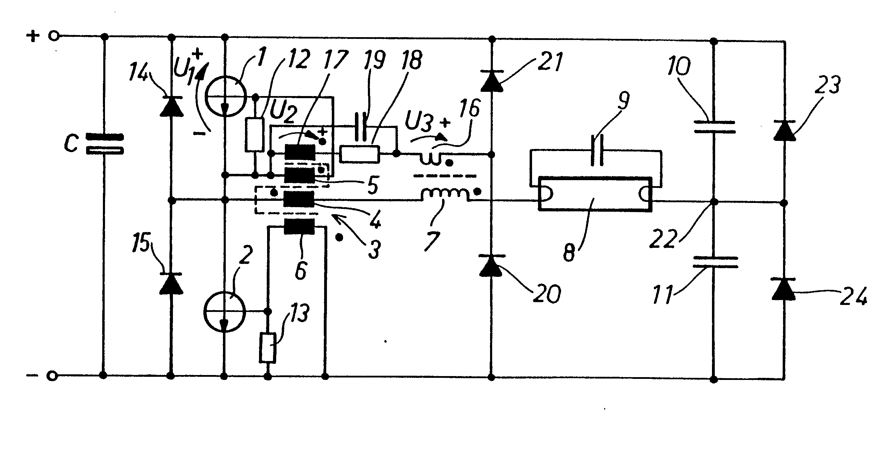

Fig. 1 shows a circuit diagram of an inverter circuit of the invention applied as a ballast for a discharge lamp and

Fig. 2 shows a voltage division diagram of a base current control circuit, the respective voltages being indicated in fig. 1 in the conductive state of transistor 1.

The structure and operation of an inverter circuit will now be briefly explained. Across the direct-current terminals + and − a filtering capacitor C as well as two in series connected transistors 1 and 2 are connected, geared in alternating phase operation by means of a base control transformer 3. Secondary windings 5 and 6 of said base control transformer 3 are connected to the bases of transistors 1 and 2 in a manner that the bases of each transistor receive opposite phase control voltages relative to each other. Thus, when one transistor is conductive the other is non-conductive and vice versa.

A load circuit is connected across a point between transistors 1 and 2 and a power source. Said load circuit comprises an inductive winding 7 and capacitors 10 and 11 connected in series therewith, the current flowing through said capacitors alternating on successive halfcycles. A lamp 8 and an ignition capacitor 9 are forming a parallel connection for a series resonance circuit consisting of winding 7 and resonance capacitors 10 and 11. The capacitors 10 and 11 are accompanied by stabilizing diodes 23 and 24 which restrict a voltage across capacitors 10 and 11, so that the voltage will be stabilized at point 22.

Protective diodes 14 and 15 generate a current flow path for inductive winding 7 when both transistors 1 and 2 are in a non-conductive state. Resistors 12 and 13, connected to be base-emitter circuit of transistors 1 and 2, serve to damp undesired oscillations in a known manner.

The base current control circuit includes a secondary winding 16 for inductive winding 7, said secondary winding 16 being connected in series with a winding 17 of the base control transformer 3. When transistor 1 is in conductive state, the base current control circuit closes itself through a diode 21 and the collector-emitter circuit of transistor 1. Accordingly, when transistor 2 is in conductive state, the control circuit closes itself through a diode 20 and transistor 2. When one of the diodes 20, 21 closes the circuit of said control circuit, the other diode will prevent, that the current flows through the presently conductive transistor and through the control circuit to the power source terminal which is opposite relative to the presently conductive transistor.

A control circuit series resistor 18 limits the control current to proper strength.

A capacitor 19 is not absolutely necessary, but it will perform as follows: With transistor 1 or 2 turning nonconductive, a current peak produced by the circuit inductance strives to pass through the diode 20 or 21 in the wrong direction. Said peak is passed through capacitor 19. In order to eliminate the effect of this current peak on a current transformer made up by windings 17 and 5.

The base current control circuit operates as follows. It is presumed that transistor 1 is in conductive state. The collector current of transistor 1 begins to decrease in this example at a rate determined by the resonance frequency of the load circuit. Decrease of the current in winding 4 results in the corresponding decrease of a base current flowing through winding 5. When the base current reaches zero and turns negative, the transistor still remains conductive for a short period due to the stored charge carries. The base current will further grow in negative direction until the charge carriers are eliminated; then the transistor will be switched off.

In order to switch off the transistor 1 before transistor 2 turns conductive, the base current control circuit functions as follows. A voltage $U_3$ induced in winding 16 is dependent from the rate of decrease of the collector current of transistor 1, selected to be conductive in this example. When the falling rate or rate of decrease is sufficient to generate voltage $U_3$, which together with voltage $U_2$ exceeds the voltage drop $U_1$ of transistor and the biasing voltage of diode 21, a control current begins to flow in the control circuit. The control current generated by voltage $U_3$ loads a control transformer 3 by way of a current transformer made up by windings 17 and 5/6. Thereby the decrease, reversal of the forward base current of transistor 1 and backward increase will be sped up. The elimination of charge carriers or transmitters from the transistor will be sped up accordingly, and the transistor can be switches off more quickly.

Essential is that the base current is not acted upon until the collector current decrease phase is reached, whereby the transistor losses will not increase, i. e. the transistor is not switched before its voltage drop is at minimum.

Further, it is advantageous that the circuit automatically observes the state of the load. With the frequency or amplitude increasing, the rate of decrease of the collector current increases accordingly and the voltage $U_3$ induced in secondary winding 16 increases, thus accelerating the switching of transistor out of the saturation during the collector current decrease phase.

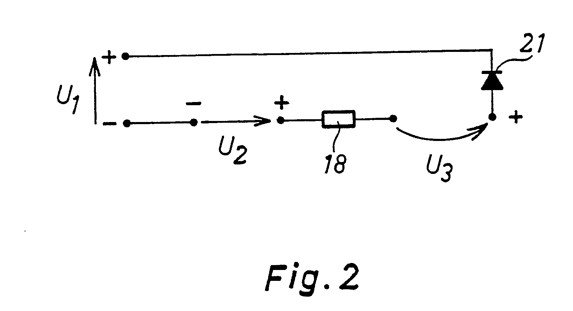

It can be noted from the voltage diagram of fig. 2 that the control automatically observes differences in the characteristics of individual transistors, since the collector-emitter circuit of a transistor is part of the control circuit. The winding voltage $U_3$ is in series with the collector-emitter voltage $U_1$ of a given conductive transistor 1 or 2. If said voltage $U_1$ will make control voltage $U_3$ decrease the higher said collector-emitter voltage $U_1$ is. On the other hand, if $U_1$ is low and transistor is deep in saturation and switched off slowly, voltage $U_1$ will decrease control voltage $U_3$ less. $U_3$ thus generates a higher control current which in turn increases the load on transformer 3 for decreasing, thereby reversing and/or increasing the load in negative direction at a faster rate.

On the following half-cycle, with transistor 2 in a conductive and transistor 1 in non-conductive state, the operation of said control circuit is exactly the same, only the direction of control voltage $U_3 + U_2$ will be reserved. The control circuit is closed through transistor 2 and diode 20.

Although the invention has been described for an inverter circuit for the ballast of a discharge lamp, it is obvious that the invention can be applied in all inverter circuits regardless of the type of load. Neither is the invention limited to the case where a base control transformer is provided with a primary winding 4 connected with a load circuit but, instead, the control for secondary windings 5 and 6 of a base control transformer can be applied as a positive control from an external control source, the circuit not being freely oscillating. A control circuit improving the switching off of transistors operates in this case equally satisfying.

**Claims**

1. An inverter circuit, comprising:
- two transistors (1, 2) connected in series across the terminals of a direct-current power supply, a control transformer (3) for the transistors, each of two secondary windings (5, 6) of said transformer being connected to a respective base control circuit of said transistors (1, 2),
- a load circuit including a series connection of an inductive winding (7) and a capacitor (10, 11) and being connected across a point between the transistors (1 and 2) and the direct-current power supply,
- and a base current control circuit, including a secondary winding (16) for said inductive winding (7) and a winding (17) for the base control transformer (3), said latter winding being connected to said secondary winding (16),
- characterized in that the base current control circuit further comprises a collector-emitter circuit of the respective transistor (1, 2) and that the control circuit is connected to the terminals of the direct current power supply by way of two rectifiers (20, 21), a given one of said rectifiers closing the control circuit while the other rectifier prevents the current from flowing through a presently conductive transistor (1 or 2) and the control circuit to the power supply terminal (− or +) opposite to said presently conductive transistor, whereby a voltage ($U_3$), induced in the secondary winding (16) of said inductive winding (7) and indicating the rate of decrease of the collector current of transistor (1 or 2), said voltage ($U_3$) being reduced by a collector-emitter voltage ($U_1$) of transistor (1 or 2), improves the switching off of the respective transistor (1 or 2) as the risk of simultaneous condition of the transistors (1 and 2) increases.

2. An inverter circuit as set forth in claim 1, characterized in that the base current control circuit comprises a series connection, including the secondary winding (16) for said inductive winding (7), said winding (17) for the base control transformer (3), one of said rectifiers (21 or 20) and one of said transistors (1 or 2) as well as a resistor (18) determining the strength of a control current.

3. An inverter circuit as set forth in claim 1 or 2, characterized in that the base current control circuit is connected to a point between the rectifiers (20 and 21), connected in series and in backward direction across the terminals of the direct-current power supply.

**Patentansprüche**

1. Umformer, umfassend:
- zwei über die Anschlüsse einer Gleichstromversorgung in Reihe geschaltete Transistoren (1, 2),
- einen Steuertransformator (3) für die Transistoren, wobei jede von zwei Sekundärwicklungen (5, 6) des Transformators an einen entsprechenden Basis-Steuerkreis der Transistoren (1, 2) angeschlossen ist,
- einen Lastkreis, der eine Reihenschaltung aus einer induktiven Wicklung (7) und einem Kondensator (10, 11) aufweist und über einen Verzweigungspunkt zwischen den Transistoren (1 und 2) und die Gleichstromversorgung geschaltet ist, und
- einen Basisstrom-Steuerkreis mit einer Sekundärwicklung (16) für die induktive Wicklung (7) und mit einer Wicklung (17) für den Basis-Steuertransformator (3), wobei die letztere Wicklung (17) mit der Sekundärwicklung (16) verbunden ist, dadurch gekennzeichnet, daß der Basisstrom-Steuerkreis ferner einen Kollektor-Emitterkreis des betreffenden Transistors (1, 2) umfaßt und daß der Steuerkreis an die Anschlüsse der Gleichstromversorgung über zwei Gleichrichter (20, 21) angeschlossen ist, von denen ein vorgegebener Gleichrichter den Steuerkreis schließt, während der andere Gleichrichter einen Stromfluß durch einen augenblicklich durchgeschalteten Transistor (1 oder 2) und den Steuerkreis zum Stromversorgungsanschluß (– oder +) entgegengesetzt zum augenblicklich durchgeschalteten Transistor verhindert, wobei eine Spannung ($U_3$), die in der Sekundärwicklung (16) der induktiven Wicklung (7) induziert wird und die Abfallgröße des Kollektorstroms des Transistors (1 oder 2) anzeigt, durch eine Kollektor-Emitterspannung ($U_1$) des Transistors (1 oder 2) herabgesetzt wird, das Abschalten des betreffenden Transistors (1 oder 2) bei zunehmender Gefahr für ein gleichzeitiges Durchschalten der Transistoren (1 und 2) verbessert.

2. Umformer nach Anspruch 1, dadurch gekennzeichnet, daß der Basisstrom-Steuerkreis eine Reihenschaltung aufweist, die die Sekundärwicklung (16) für die induktive Wicklung (7), die Wicklung (17) für den Basis-Steuertransformator (3), einen der Gleichrichter (21 oder 20) und einen der Transistoren (1 oder 2) sowie einen die Stärke eines Steuerstroms bestimmenden Widerstand (18) umfaßt.

3. Umformer nach Anspruch 1 oder 2, dadurch gekennzeichnet, daß der Basisstrom-Steuerkreis an einen Verzweigungspunkt zwischen den Gleichrichtern (20 und 21) angeschlossen, in Reihe und in Rückwärtsrichtung über die Anschlüsse der Gleichstromversorgung geschaltet ist.

**Revendications**

1. Circuit convertisseur, comprenant:
- deux transistors (1, 2) connectés en série entre les bornes d'une alimentation en courant continu,
- un transformateur de commande (3) pour les transistors, chacun de deux enroulements secondaires (5, 6) dudit transformateur étant raccordé à un circuit respectif de commande de base desdits transistors (1, 2),
- un circuit de charge comportant une combinaison en série formée d'un enroulement inductif (7) et d'un condensateur (10, 11) et étant connecté entre un point, situé entre les transistors (1 et 2) et l'alimentation en courant continu,
- et un circuit de commande de courant de base, comportant un enroulement secondaire (16) pour le dit enroulement inductif (7) et un enroulement (17) pour le transformateur (3) de commande de base, ce dernier enroulement étant connecté audit enroulement secondaire (16), caractérisé en ce que le circuit de commande de courant de base comprend en outre un circuit collecteur-émetteur du transistor respectif (1, 2) et en ce que le circuit de commande est raccordé aux bornes de l'alimentation en courant continu par l'intermédiaire de deux redresseurs (20, 21), un redresseur donné parmi lesdits redresseurs fermant le circuit de commande pendant que l'autre redresseur empêche le courant de circuler à travers un transistor présentement conducteur (1 ou 2) et le circuit de commande vers la borne d'alimentation (– ou +) opposée audit transistor présentement conducteur, de sorte qu'une tension ($U_3$), induite dans l'enroulement secondaire (16) dudit enroulement inductif (7) et indiquant la vitesse de diminution du courant de collecteur du transistor (1 ou 2), ladite tension ($U_3$) étant réduite par une tension collecteur-émetteur ($U_1$) du transistor (1 ou 2), améliore la commutation en non conduction du transistor respectif (1 ou 2) lorsque le risque de conduction simultanée des transistors (1 et 2) augmente.

2. Circuit convertisseur suivant la revendication 1, caractérisé en ce que le circuit de commande de courant de base comprend une connexion en série, comportant l'enroulement secondaire (16) pour ledit enroulement inductif (7), ledit enroulement (17) pour le transformateur (3) de commande de base, l'un desdits redresseurs (21 ou 20) et l'un desdits transistors (1 ou 2), ainsi qu'une résistance (18) déterminant l'intensité d'un courant de commande.

3. Circuit convertisseur suivant la revendication 1 ou 2, caractérisé en ce que le circuit de commande de courant de base est connecté à un point situé entre les redresseurs (20 et 21), connectés en série et en sens inverse entre les bornes de l'alimentation en courant continu.

0 155 303

Fig. 2